# DEMANDE DE BREVET EUROPEEN

(11) **EP 2 821 281 A1**
(43) Date de publication de la demande: **07.01.2015**
(21) Numéro de dépôt: 14175270.9
(22) Date de dépôt: 01.07.2014
(51) Int. Cl.: B60Q 1/076, F21S 8/10, B60Q 1/12

(54) **Module d'éclairage directionnel par platine de support convergente**

(30) Priorité: 04.07.2013 FR 1356586
(71) Demandeur: VALEO VISION, 93012 Bobigny Cedex (FR)
(72) Inventeur: Ruat, Olivier, 49800 TRELAZE (FR)

(57) **Abrégé**

Un agencement (10) pour projecteur lumineux de véhicule automobile, comprend un module d'éclairage (11) apte à émettre au moins un faisceau lumineux et une platine de support (12) comprenant au moins un élément d'articulation (121) assurant une liaison à pivotement du module d'éclairage (11) par rapport à la platine de support (12) et au moins un élément de fixation (122) destiné à assurer une fixation de la platine de support (12) sur un corps de projecteur (101). Ledit au moins un élément d'articulation (121) est disposé en avant par rapport audit au moins un élément de fixation (122) suivant la direction (D) et le sens (S) d'éclairage dudit au moins un faisceau lumineux émis par le module d'éclairage (11).

## Description

L'invention concerne un agencement pour projecteur lumineux de véhicule automobile, comprenant un module d'éclairage émettant au moins un faisceau lumineux et une platine de support comprenant au moins un élément d'articulation assurant une liaison à pivotement du module d'éclairage par rapport à la platine de support et au moins un élément de fixation destiné à assurer une fixation de la platine de support sur un corps de projecteur.

L'invention a pour objet également un projecteur lumineux de véhicule automobile comprenant un corps de projecteur et un tel agencement.

Dans la construction d'un projecteur lumineux de véhicule automobile, il est connu de prévoir un module d'éclairage monté à pivotement par rapport au corps de projecteur, afin de rendre le faisceau lumineux émis par le module d'éclairage directionnel en fonction de la trajectoire adoptée par le véhicule en virage. Le module d'éclairage est la plupart du temps monté à pivotement sur une platine de support elle-même fixée au corps de projecteur.

Dans les solutions implémentées actuellement, le module d'éclairage est de type elliptique de sorte qu'il est peu encombrant globalement, facilitant les possibilités de pivotement. La platine de support est plane et de forme rectangulaire adaptée de sorte à encadrer le module d'éclairage. Compte tenu du faible encombrement, des éléments de masquage sont facilement montés solidaires du module d'éclairage ou de la platine de support ou du corps de projecteur de sorte à combler le jeu entre le module d'éclairage et le corps de projecteur et masquer l'arrière du projecteur en derrière du module d'éclairage.

Dans le domaine de l'éclairage et de la signalisation de véhicules automobiles, il est de plus en plus fréquent et avantageux d'utiliser des sources de lumière basées sur l'usage d'une ou plusieurs diodes électroluminescentes connues sous le nom de LED pour « Light Emitting Diode » en terminologie anglosaxonne.

Si l'usage d'un module d'éclairage à base de diodes électroluminescentes apporte une réponse en termes de consommation d'énergie, d'intensité et de directivité de rayonnement, il est impossible de l'adapter aux solutions connues de construction d'un projecteur lumineux à faisceau directionnel. En effet, la forme d'un module d'éclairage à diodes électroluminescentes est généralement rectangulaire au contraire d'un module d'éclairage elliptique et son encombrement est nettement plus important, de sorte que si on le monte sur une platine de support connue, alors l'agencement devient lui-même trop encombrant pour être monté dans un projecteur lumineux. D'autre part, les éléments de masquage entreraient en collision avec la platine de support lors du pivotement du module d'éclairage, ce qui n'est bien évidemment pas satisfaisant.

Le but de la présente invention est de proposer une solution de module d'éclairage directionnel pour projecteur lumineux de véhicule automobile qui remédie aux inconvénients listés ci-dessus.

Notamment, la solution proposée a pour but :
- de permettre l'utilisation aisée d'un module d'éclairage utilisant des diodes électroluminescentes malgré la problématique d'encombrement qui en résulte,
- de s'affranchir de tout risque de collision entre les éléments de masquage éventuels et la platine de support.

Ces buts peuvent être atteints par l'intermédiaire d'un agencement pour projecteur lumineux de véhicule automobile, comprenant un module d'éclairage apte à émettre au moins un faisceau lumineux et une platine de support comprenant au moins un élément d'articulation assurant une liaison à pivotement du module d'éclairage par rapport à la platine de support et au moins un élément de fixation destiné à assurer une fixation de la platine de support sur un corps de projecteur, ledit au moins un élément d'articulation étant disposé en avant par rapport audit au moins un élément de fixation suivant la direction et le sens d'éclairage dudit au moins un faisceau lumineux émis par le module d'éclairage.

Préférentiellement, le module d'éclairage comprend au moins une diode électroluminescente apte à participer à l'émission dudit au moins un faisceau lumineux.

L'agencement peut comprendre un élément d'actionnement mettant en oeuvre un pivotement du module d'éclairage autour dudit au moins un élément d'articulation de la platine de support afin de placer le module d'éclairage dans une configuration angulaire déterminée par rapport à la platine de support. L'élément d'actionnement peut préférentiellement être solidaire de la platine de support.

Dans un mode de réalisation, ledit au moins un élément de fixation est disposé au niveau de la partie arrière du module d'éclairage ou en arrière par rapport à la partie arrière du module d'éclairage suivant la direction et le sens d'éclairage dudit au moins un faisceau lumineux émis par le module d'éclairage.

De préférence, la platine de support comprend au moins deux ailes supérieures comprenant chacune une première partie dudit au moins un élément de fixation et agencées de manière à converger en direction dudit au moins un élément d'articulation. Les deux ailes supérieures peuvent notamment être disposées au-dessus du module d'éclairage.

Dans un mode de réalisation, les deux ailes supérieures sont liées entre elles au niveau d'une première partie dudit au moins un élément d'articulation de manière à ce que les deux ailes supérieures présentent une forme de V s'ouvrant suivant la direction d'éclairage dans un sens opposé au sens d'éclairage. Par exemple, les deux ailes supérieures peuvent présenter un profil rectiligne. En variante, les deux ailes supérieures peuvent présenter un profil courbe.

Préférentiellement, la platine de support comprend deux ailes inférieures, notamment comprenant chacune une deuxième partie dudit au moins un élément de fixation, les deux ailes inférieures étant agencées de manière à converger en direction dudit au moins un élément d'articulation. Les deux ailes inférieures peuvent être disposées en dessous du module d'éclairage.

Dans un mode de réalisation, les deux ailes inférieures sont liées entre elles au niveau d'une deuxième partie dudit au moins un élément d'articulation de manière à ce que les deux ailes inférieures présentent une forme de V s'ouvrant suivant la direction d'éclairage dans un sens opposé au sens d'éclairage.

La platine de support peut comporter deux portants, chaque portant reliant l'une des ailes inférieures à l'une des ailes supérieures de manière à ce que la platine de support présente une forme de cadre à contour fermé à l'intérieur duquel au moins une partie du module d'éclairage est disposée. Le cas échéant, le cadre peut ne pas être plan.

L'agencement peut comprendre un élément de masquage solidaire et encadrant le module d'éclairage et destiné à s'interposer entre le module d'éclairage et le corps de projecteur, l'agencement étant configuré de manière à ce que l'élément de masquage empêche tout contact avec la platine de support durant tout pivotement du module d'éclairage.

L'agencement peut comprendre une pluralité d'éléments d'articulation assurant la liaison à pivotement du module d'éclairage par rapport à la platine de support. Préférentiellement, une première partie des éléments d'articulation est disposée au-dessus du module d'éclairage et une deuxième partie des éléments d'articulation est disposée en dessous du module d'éclairage.

L'agencement peut comprendre une pluralité d'éléments de fixation assurant la fixation de la platine de support sur le corps de projecteur.

Un projecteur lumineux de véhicule automobile pourra comprendre un corps de projecteur et un tel agencement dont la platine de support est fixée au niveau dudit au moins un élément de fixation audit corps de projecteur.

D'autres avantages et caractéristiques ressortiront plus clairement de la description qui va suivre de modes particuliers de réalisation de l'invention donnés à titre d'exemples non limitatifs et représentés sur les dessins annexés, dans lesquels :
- les figures 1 à 3 illustrent un exemple d'agencement selon l'invention, en vue de dessus, selon trois orientations différentes du module d'éclairage par rapport à la platine de support,
- la figure 4 est une vue en perspective de devant de l'agencement des figures 1 à 3,
- les figures 5 et 6 sont des vues en perspective de devant d'un exemple de projecteur lumineux de véhicule automobile selon l'invention, comprenant l'agencement des figures 1 à 4.

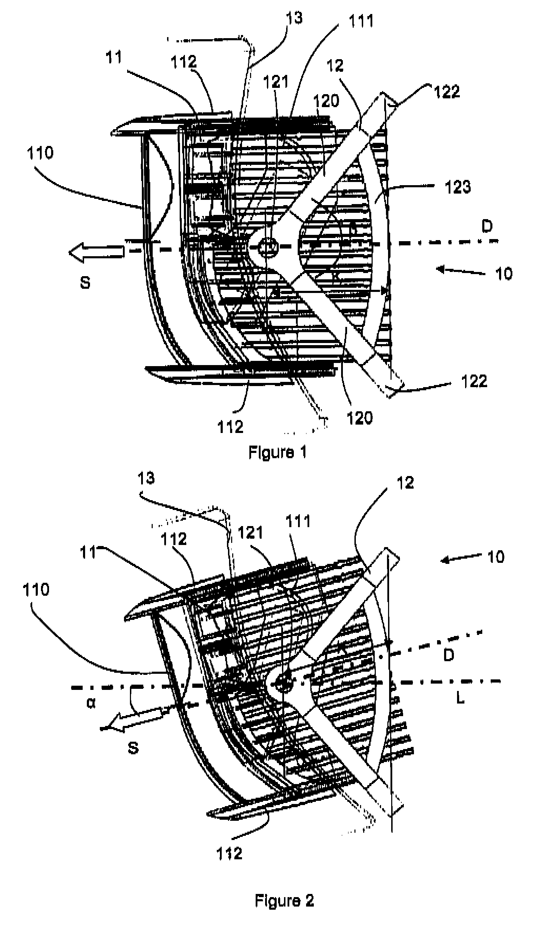

L'invention détaillée ci-dessous et en référence aux figures 1 à 6 concerne d'une part un agencement 10 pour projecteur lumineux de véhicule automobile, d'autre part un projecteur lumineux 100 de véhicule automobile en tant que tel.

L'agencement 10 comprend un module d'éclairage 11 émettant au moins un faisceau lumineux selon une direction d'éclairage D et selon un sens d'éclairage S suivant cette direction d'éclairage D. Autrement dit, par « direction d'éclairage », on entend la droite non orientée de support du faisceau lumineux. Le module d'éclairage comprend une face avant 110 au niveau de laquelle le faisceau lumineux est émis hors du module 11 et un élément de refroidissement 111 agencé dans la partie arrière du module 11. La notion d'avant-arrière est dirigée suivant la direction D et orientée suivant le sens S pour aller de l'arrière vers l'avant. Il s'agit essentiellement mais non exclusivement d'un module d'éclairage 11 qui comprend au moins une diode électroluminescente apte à participer à l'émission dudit au moins un faisceau lumineux selon la direction D et le sens S d'éclairage.

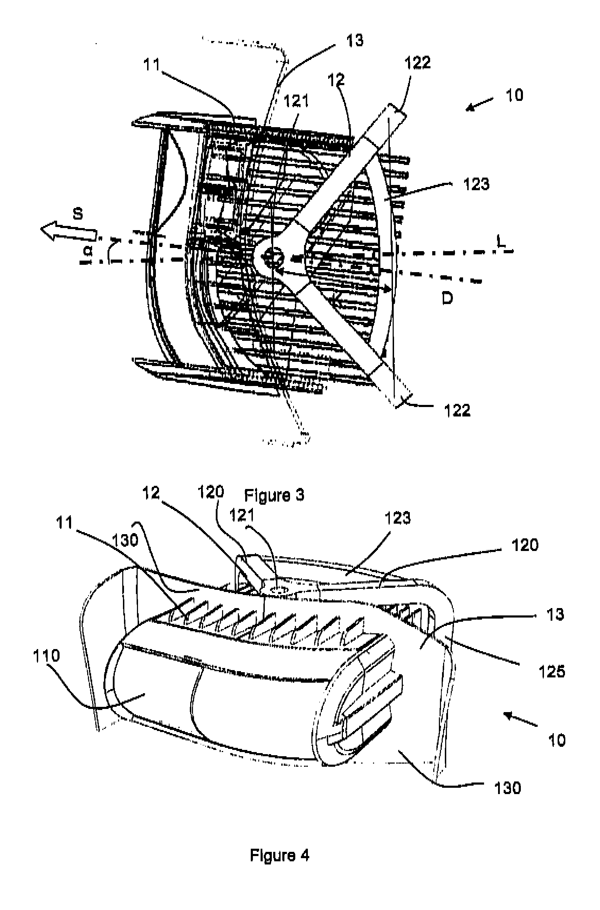

L'agencement 10 comprend aussi une platine de support 12 comprenant au moins un élément d'articulation 121 assurant une liaison à pivotement du module d'éclairage 11 par rapport à la platine de support 12 et au moins un élément de fixation 122, par exemple par vissage, destiné à assurer une fixation de la platine de support 12 sur un corps de projecteur 101. L'axe de pivotement est globalement perpendiculaire à la direction d'éclairage Z et est par exemple orientée verticalement lorsque le projecteur lumineux 100 est monté sur le véhicule automobile. Par pivotement autour dudit au moins un élément d'articulation 121, la direction d'éclairage D forme un angle α variable par rapport à la direction longitudinale L avant-arrière du véhicule automobile. La platine de support 12 est fixe quant à elle par rapport à la direction longitudinale L. La figure 1 représente le cas où α est nul, la direction d'éclairage D coïncidant avec la direction L en vue de dessus, ce qui est le cas en ligne droite. Les figures 2 et 3 représentent les cas de figure où l'angle α est respectivement positif et négatif. A cet effet, l'agencement 10 comprend un élément d'actionnement (non représenté) mettant en oeuvre un pivotement du module d'éclairage 11 autour dudit au moins un élément d'articulation 121 de la platine de support 12 afin de placer le module d'éclairage 11 dans une configuration angulaire déterminée par rapport à la platine de support 12, en modulant la valeur de l'angle α. La nature de l'élément d'actionnement peut être quelconque. L'élément d'actionnement peut préférentiellement être solidaire de la platine de support 12.

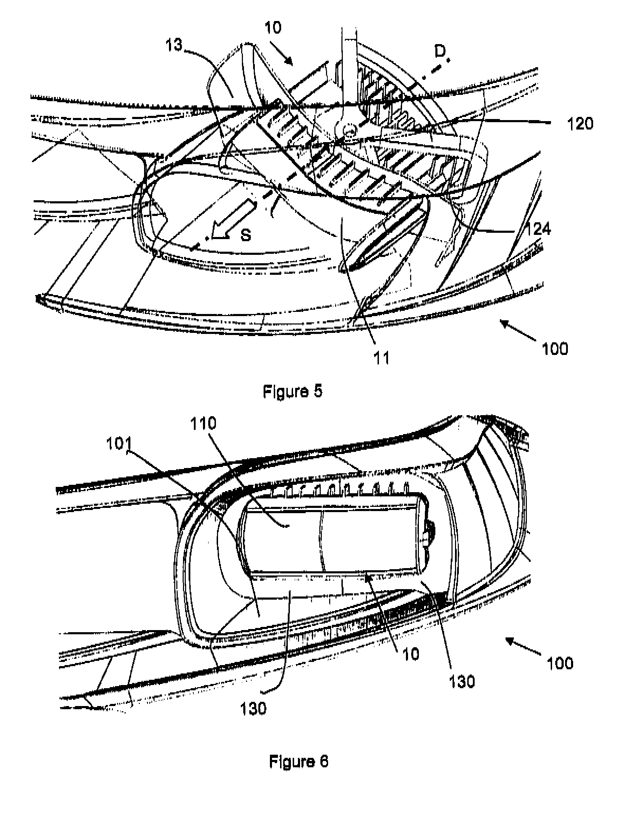

Les figures 5 et 6 montrent le projecteur lumineux 100 de véhicule automobile comprenant le corps de projecteur 101 et un tel agencement 10 dont la platine de support 12 est fixée au niveau dudit au moins un élément de fixation 122 au corps de projecteur 101. L'élément d'actionnement à pivotement du module d'éclairage 11 est par exemple implanté au niveau de l'interface entre le corps de projecteur 101 et la platine de support 12 et/ou peut être intégré dans ledit au moins un élément d'articulation 121 et/ou peut être implanté au niveau de l'interface entre la platine de support 12 et le module d'éclairage 11.

Selon une caractéristique essentielle, ledit au moins un élément d'articulation 121 est disposé en avant par rapport au dit au moins un élément de fixation 122 suivant la direction D et le sens d'éclairage S dudit au moins un faisceau lumineux émis par le module d'éclairage 11. Ce décalage compté le long de la direction variable d'éclairage D entre ledit au moins un élément d'articulation 121 et ledit au moins un élément de fixation 122, est repéré K sur les figures 1 à 3. Il convient aussi de préciser que l'élément d'articulation 121 est disposé en avant par rapport à l'élément de fixation 122 suivant la direction longitudinale L avant-arrière du véhicule, la distance les séparant étant fixe dans un repère lié à la platine de support 12, notamment le long de la direction L. Comme la distance séparant ledit au moins un élément d'articulation 121 et ledit au moins un élément de fixation 122 présente une grandeur fixe dans un repère lié à la platine de support 12 et que la direction d'éclairage D est variable par pivotement, il est compris que la mesure du décalage K entre ledit au moins un élément d'articulation 121 et ledit au moins un élément de fixation 122 suivant la direction D grandit en même temps que l'angle α.

Cette adaptation de la forme de la platine de support 12 présente l'avantage de dégager ou de libérer autant que possible les bords 112 du module d'éclairage 11 suivant la direction D et le devant du module d'éclairage 11 à proximité ou au niveau de la face avant 110.

Avantageusement, comme illustré sur les vues de dessus des figures 1 à 3, ledit au moins un élément de fixation 122 est disposé au niveau de la partie arrière du module d'éclairage 11 ou en arrière par rapport à la partie arrière du module d'éclairage 11 suivant la direction D et le sens S d'éclairage dudit au moins un faisceau lumineux émis par le module d'éclairage 11. Cela permet d'augmenter l'effet de dégagement des bords 112 du module d'éclairage 11 sur toute sa longueur suivant la direction D, voire au-delà de sa partie arrière.

Préférentiellement, l'agencement comprend une pluralité d'éléments d'articulation 121 assurant la liaison à pivotement du module d'éclairage 11 par rapport à la platine de support 12. Il sera alors avantageux de prévoir qu'une première partie des éléments d'articulation 121 soit disposée au-dessus du module d'éclairage 11 et une deuxième partie des éléments d'articulation 121 soit disposée en dessous du module d'éclairage 11.

Il est également avantageux de prévoir que l'agencement comprenne une pluralité d'éléments de fixation 122 assurant la fixation de la platine de support 12 sur le corps de projecteur 101.

De manière préférentielle, la platine de support 12 comprend au moins deux ailes supérieures 120 comprenant chacune la première partie des éléments de fixation 122 et agencées de manière à converger en direction dudit au moins un élément d'articulation 121. Les deux ailes supérieures 120 sont disposées au-dessus du module d'éclairage 11 et forment un angle β entre elles ouvert en direction de l'arrière suivant la direction longitudinale L avant-arrière du véhicule automobile. Les deux ailes supérieures 120 sont liées entre elles au niveau d'une première partie dudit au moins un élément d'articulation 121 de manière à ce que les deux ailes supérieures présentent une forme de V s'ouvrant suivant la direction d'éclairage D dans un sens opposé au sens d'éclairage S. Dans leurs parties arrière, les ailes supérieures 120 comprennent donc chacune un élément de fixation 122 dont la réunion constitue la première partie des éléments de fixation.

Par ailleurs, la platine de support 12 comprend deux ailes inférieures 124, notamment comprenant chacune la deuxième partie des éléments de fixation 122. Les deux ailes inférieures 124 sont agencées de manière à converger en direction de la deuxième partie des éléments d'articulation. Les deux ailes inférieures 124 sont disposées en dessous du module d'éclairage 11 et sont liées entre elles au niveau de la deuxième partie des éléments d'articulation de manière à ce que les deux ailes inférieures présentent une forme de V s'ouvrant suivant la direction d'éclairage D dans un sens opposé au sens d'éclairage S. Dans leurs parties arrière, les ailes inférieures 124 comprennent donc chacune un élément de fixation 122 dont la réunion constitue la deuxième partie des éléments de fixation.

La platine de support 12 comprend ensuite deux portants 125, chaque portant 125 reliant l'une des ailes inférieures 124 à l'une des ailes supérieures 120 de manière à ce que la platine de support 12 présente une forme de cadre à contour fermé à l'intérieur duquel au moins une partie du module d'éclairage 11 est disposée. La forme de cadre à contour fermé est non plane et présente une forme gauche dans l'espace.

Avantageusement, la platine de support 12 comprend un élément de rigidification 123 reliant les deux ailes 120 entre les éléments de fixation 122 et les éléments d'articulation 121 de sorte à assurer une fonction de triangulation en combinaison avec les ailes 120, 124.

Les deux ailes supérieures 120 sont liées entre elles au niveau de la première partie supérieure des éléments d'articulation 121 et les deux ailes inférieures 124 sont liées entre elles au niveau de la deuxième partie inférieure des éléments d'articulation 121 de sorte que la platine de support 12 présente :
- une forme de V s'ouvrant suivant la direction d'éclairage D dans un sens opposé au sens d'éclairage S,
- une forme de cadre à contour fermé non plan à l'intérieur duquel au moins une partie du module d'éclairage 11 est disposée.

Chaque aile supérieure 120 et chaque aile inférieure 124 peut être rectiligne ou courbée sur sa longueur.

Enfin, l'agencement 10 comprend un élément de masquage 13 solidaire et encadrant le module d'éclairage 11. L'élément de masquage 13 est destiné à s'interposer entre le module d'éclairage 11 et le corps de projecteur 101. L'agencement 10 est configuré de sorte que l'élément de masquage 13 empêche tout contact avec la platine de support 12 durant tout pivotement du module d'éclairage 11. Par exemple sur la figure 2, il existe un jeu j toujours non nul entre l'élément de masquage 13 et l'aile 120 de la platine de support 12. L'élément de masquage 13 est agencé de sorte à combler le jeu entre le module d'éclairage 11 et le corps de projecteur 101 et à masquer l'arrière du projecteur 100 en derrière du module d'éclairage 11. L'élément de masquage peut être formé en au moins deux parties 130 indépendantes et assemblées l'une sur l'autre suivant une direction horizontale perpendiculaire à la direction d'éclairement D, d'une manière permettant de constituer un élément de masquage 13 ayant une forme de cadre à contour fermé traversé par le module d'éclairage 11 selon la direction D.

## Revendications

1. Agencement (10) pour projecteur lumineux de véhicule automobile, comprenant un module d'éclairage (11) apte à émettre au moins un faisceau lumineux et une platine de support (12) comprenant au moins un élément d'articulation (121) assurant une liaison à pivotement du module d'éclairage (11) par rapport à la platine de support (12) et au moins un élément de fixation (122) destiné à assurer une fixation de la platine de support (12) sur un corps de projecteur (101), **caractérisé en ce que** ledit au moins un élément d'articulation (121) est disposé en avant par rapport audit au moins un élément de fixation (122) suivant la direction (D) et le sens (S) d'éclairage dudit au moins un faisceau lumineux émis par le module d'éclairage (11).

2. Agencement selon la revendication 1, **caractérisé en ce que** le module d'éclairage (11) comprend au moins une diode électroluminescente apte à participer à l'émission dudit au moins un faisceau lumineux.

3. Agencement selon l'une des revendications 1 ou 2, **caractérisé en ce qu'**il comprend un élément d'actionnement mettant en oeuvre un pivotement du module d'éclairage (11) autour dudit au moins un élément d'articulation (121) de la platine de support (12) afin de placer le module d'éclairage (11) dans une configuration angulaire déterminée par rapport à la platine de support (12).

4. Agencement selon l'une des revendications 1 à 3, **caractérisé en ce que** ledit au moins un élément de fixation (122) est disposé au niveau de la partie arrière du module d'éclairage (11) ou en arrière par rapport à la partie arrière du module d'éclairage (11) suivant la direction (D) et le sens (S) d'éclairage dudit au moins un faisceau lumineux émis par le module d'éclairage (11).

5. Agencement selon l'une des revendications 1 à 4, **caractérisé en ce que** la platine de support (12) comprend au moins deux ailes supérieures (120) comprenant chacune une première partie dudit au moins un élément de fixation (122) et agencées de manière à converger en direction dudit au moins un élément d'articulation (121).

6. Agencement selon la revendication 5, **caractérisé en ce que** les deux ailes supérieures (120) sont disposées au-dessus du module d'éclairage (11).

7. Agencement selon l'une des revendications 5 ou 6, **caractérisé en ce que** les deux ailes supérieures (120) sont liées entre elles au niveau d'une première partie dudit au moins un élément d'articulation (121) de manière à ce que les deux ailes supérieures présentent une forme de V s'ouvrant suivant la direction d'éclairage (D) dans un sens opposé au sens d'éclairage (S).

8. Agencement selon l'une des revendications 5 à 7, **caractérisé en ce que** la platine de support (12) comprend deux ailes inférieures (124), notamment comprenant chacune une deuxième partie dudit au moins un élément de fixation (122), les deux ailes inférieures (124) étant agencées de manière à converger en direction dudit au moins un élément d'articulation (121).

9. Agencement selon la revendication 8, **caractérisé en ce que** les deux ailes inférieures (124) sont disposées en dessous du module d'éclairage (11).

10. Agencement selon l'une des revendications 8 ou 9, **caractérisé en ce que** les deux ailes inférieures (124) sont liées entre elles au niveau d'une deuxième partie dudit au moins un élément d'articulation (121) de manière à ce que les deux ailes inférieures (124) présentent une forme de V s'ouvrant suivant la direction d'éclairage (D) dans un sens opposé au sens d'éclairage (S).

11. Agencement selon l'une des revendications 9 ou 10, **caractérisé en ce que** la platine de support (12) comporte deux portants (125), chaque portant (125) reliant l'une des ailes inférieures (124) à l'une des ailes supérieures (120) de manière à ce que la platine de support (12) présente une forme de cadre à contour fermé à l'intérieur duquel au moins une partie du module d'éclairage (11) est disposée.

12. Agencement selon l'une des revendications 1 à 11, **caractérisé en ce qu'**il comprend un élément de masquage (13) solidaire et encadrant le module d'éclairage (11) et destiné à s'interposer entre le module d'éclairage (11) et le corps de projecteur (101), l'agencement (10) étant configuré de manière à ce que l'élément de masquage (13) empêche tout contact avec la platine de support (12) durant tout pivotement du module d'éclairage (11).

13. Agencement selon l'une des revendications 1 à 12, **caractérisé en ce qu'**il comprend une pluralité d'éléments d'articulation (121) assurant la liaison à pivotement du module d'éclairage (11) par rapport à la platine de support (12).

14. Agencement selon la revendication 13, **caractérisé en ce qu'**une première partie des éléments d'articulation (121) est disposée au-dessus du module d'éclairage (11) et une deuxième partie des éléments d'articulation (121) est disposée en dessous du module d'éclairage (11).

15. Agencement selon l'une des revendications 1 à 14, **caractérisé en ce qu'**il comprend une pluralité d'éléments de fixation (122) assurant la fixation de la platine de support (12) sur le corps de projecteur (101).

16. Projecteur lumineux (100) de véhicule automobile comprenant un corps de projecteur (101) et un agencement (10) selon l'une quelconque des revendications précédentes dont la platine de support (12) est fixée au niveau dudit au moins un élément de fixation (122) audit corps de projecteur (101).
